# FASCICULE DE BREVET EUROPEEN

(11) **EP 3 066 274 B1**
(45) Date de publication et mention de la délivrance du brevet: **10.01.2018**
(21) Numéro de dépôt: 14809451.9
(22) Date de dépôt: 03.11.2014
(51) Int. Cl.: E04F 11/00, A61G 3/06, B60P 1/43

(54) **DISPOSITIF D'ASSISTANCE POUR PERSONNE A MOBILITÉ RÉDUITE**
HILFSVORRICHTUNG FÜR PERSONEN MIT EINGESCHRÄNKTER MOBILITÄT
ASSISTANCE DEVICE FOR A PERSON WITH REDUCED MOBILITY

(30) Priorité: 04.11.2013 FR 1360800
(43) Date de publication de la demande: 14.09.2016
(73) Titulaire: MYD "L", 93200 St. Denis (FR)
(72) Inventeur: BELMAN, Pierre, F-93200 St Denis (FR)
(74) Mandataire: de Kernier, Gabriel
(86) Numéro de dépôt international: PCT/FR2014/052785
(87) Numéro de publication internationale: WO 2015/063432

(56) Documents cités:
- EP-A2- 1 034 765
- WO-A1-96/26848
- WO-A1-98/06370
- FR-A1- 2 944 955
- US-A1- 2006 245 883

## Description

La présente invention concerne un dispositif d'assistance au franchissement d'une marche ou d'un seuil par un véhicule, notamment pour des personnes à mobilité réduite se déplaçant à l'aide d'un fauteuil roulant ou encore pour les personnes déplaçant un chariot à roues destiné au transport d'objets. Un tel dispositif est par exemple divulgué dans le document US2006/0245883 A1. Le brevet FR 2 947 224 de la demanderesse s'est montré pionnier en la matière, bien avant l'édiction des normes exigeant l'accès à tout bâtiment recevant du public par les personnes à mobilité réduite. La contrainte majeure d'absence d'empiètement permanent sur la voie publique y est identifiée, de même que l'empiètement le plus réduit possible en position déployée.

À partir de cette technique, la demanderesse a identifié plusieurs besoins à satisfaire, notamment la discrétion du dispositif qui rend souhaitable qu'il puisse être habillé avec le même revêtement que le sol avoisinant, notamment du carrelage. Le besoin est également apparu d'améliorer l'étanchéité du dispositif face aux intempéries tout en bénéficiant d'une architecture mécanique robuste et résistant aux utilisations inadaptées et aux actes de vandalismes.

Les dispositifs existants ne sont pas satisfaisants.

L'invention vient améliorer la situation.

L'invention propose un dispositif d'assistance pour personnes à mobilité réduite, notamment au franchissement d'un obstacle par un véhicule à roues, comprenant :
- un châssis stationnaire,
- un plateau supérieur mobile en hauteur,
- un plateau inférieur monté à translation selon un axe incliné par rapport à l'horizontale entre une position de repos sous le plateau supérieur et une position déployée, le plateau inférieur comprenant un corps et deux rebords latéraux disposés selon des plans parallèles audit axe, chaque rebord latéral comprenant une surface supérieure, le plateau supérieur étant supporté au moins en partie sur lesdits rebords latéraux, la position de déploiement du plateau inférieur déterminant mécaniquement la position en hauteur du plateau supérieur, lesdits rebords latéraux formant en outre un guide d'engagement et d'alignement de véhicule sur le plateau inférieur,

- un volet monté à pivotement mécanique sur le plateau supérieur selon un axe sensiblement horizontal et perpendiculaire à l'axe de translation du plateau inférieur, apte à pivoter entre une position de repos sensiblement verticale et une position déployée reposant sur le plateau inférieur, ledit volet formant jonction entre le plateau inférieur et le plateau supérieur, ledit volet étant pivoté par lesdits rebords latéraux au moins sur une partie de sa course de pivotement, et
- un organe mécanique de verrouillage du volet en position de repos, supporté par lesdits rebords latéraux et passif par rapport auxdits rebords latéraux, verrouillant ledit volet en position de repos du plateau inférieur et libérant ledit volet lorsque ledit plateau inférieur quitte sa position de repos.

Ainsi, le volet verrouillé protège le dispositif d'assistance contre la malveillance, tout en étant passif mécaniquement et en présentant une surface extérieure à double fonction de roulage en position déployée et de pare-pluie en position de repos. Le plateau inférieur se déplace selon une trajectoire rectiligne jusqu'à venir en position déployée, par exemple en contact avec le sol inférieur, par exemple la chaussée ou le trottoir. Les rebords latéraux rigidifient le corps, guident un véhicule s'engageant sur le dispositif, supportent le plateau supérieur, par exemple du côté du volet, et déterminent la position en hauteur du plateau supérieur.

Dans un mode de réalisation, le plateau inférieur est relié à un moteur entraînant un pignon en prise avec une crémaillère fixée au châssis. Cette disposition est compacte.

Dans un mode de réalisation, le dispositif comprend une poutre transversale reposant par des guides coulissant sur des rails du châssis. Le châssis peut comprendre deux rails. Chacune de ces caractéristiques améliore la précision du guidage de la poutre. Les rails peuvent présenter un champignon de section circulaire sur plus de 180°, préférablement plus de 240°. Une telle section circulaire améliore le guidage et réduit le risque d'un déraillement.

Dans un mode de réalisation, le dispositif comprend une poutre transversale reliée au plateau inférieur par des rotules. Le plateau inférieur peut jouer par rapport à la poutre s'ajustant ainsi à la position et à la forme du trottoir ou de la chaussée.

Dans un mode de réalisation, le dispositif comprend une poutre transversale, ladite poutre supportant un moteur apte à déplacer le plateau inférieur. Ainsi, le moteur peut rester protégé à l'intérieur du dispositif d'assistance, même quand le plateau inférieur est en position déployée.

Dans un mode de réalisation, une partie du corps et chaque rebord latéral sont d'une pièce en tôle pliée et le plateau inférieur comprend au moins un gousset fixé en une face inférieure du corps. Le gousset augmente la rigidité du corps. Le gousset est, préférablement, disposé décalé par rapport à des éléments disposés à l'intérieur du châssis tels qu'une crémaillère afin de réduire l'encombrement en hauteur par interpénétration des gabarits.

Dans un mode de réalisation, le corps du plateau inférieur comprend deux parties sensiblement équivalentes, chacune reliée à un rebord latéral et aptes à un décalage relatif. L'adaptation du plateau inférieur au sol inférieur sur lequel il repose à l'état déployé est améliorée, en particulier lorsque ce sol inférieur présente des irrégularités. Chaque partie peut porter un gousset distant du rebord latéral. Ainsi, chaque partie est rigidifiée. D'autre part, chaque partie du plateau inférieur peut être supportée par au moins deux rouleaux attachés au châssis. La stabilité de chaque partie du plateau inférieur est améliorée.

Dans un mode de réalisation, le plateau inférieur présente une face inférieure pourvue d'une roue prévue pour s'appuyer sur le sol inférieur au voisinage de la position déployée. Le plateau inférieur, en position déployée et en fin de déploiement, est supporté par le sol, réduisant ainsi le porte-à-faux.

Dans un mode de réalisation, les rebords latéraux glissent sous le volet lors de la translation du plateau inférieur, le volet comprenant une face intérieure apte au contact avec un poussoir du plateau inférieur, et apte au contact avec les rebords latéraux. En début de course de déploiement, le volet mobile est poussé par l'extrémité de chaque rebord latéral du plateau inférieur. Le pivotement du volet lors du déploiement résulte de l'avancement du plateau inférieur. Une telle configuration est dépourvue de système de transmission complexe. La fiabilité est améliorée.

Dans un mode de réalisation, en position de repos, le volet reprend au moins en partie le poids venant du plateau supérieur et transmet ledit poids au châssis. Le plateau inférieur est désintéressé. Les contraintes subies en position rangée sont réduites.

Dans un mode de réalisation, le plateau supérieur est supporté au moins en partie sur les rebords latéraux par au moins une roue en contact avec la surface supérieure d'un rebord latéral. Ainsi, le profil de la surface supérieure du rebord latéral et la position du plateau inférieur en translation déterminent la position en hauteur du plateau supérieur, au moins au voisinage de la roue du plateau supérieur. Le coulissement du plateau supérieur en appui sur le plateau inférieur est facilité. L'usure est limitée et contrôlée.

Dans une variante de ce mode de réalisation, la surface supérieure du rebord latéral est sensiblement plane transversalement. La roue est pourvue d'une surface de roulement plane. Ainsi, en cas de léger désalignement du plateau inférieur par rapport au plateau supérieur, par exemple en raison d'une irrégularité du sol inférieur, la zone de contact est dépourvue de concentration de contrainte.

Dans un mode de réalisation, le plateau supérieur est supporté au moins en partie sur les rebords latéraux par au moins un patin en contact avec la surface supérieure d'un rebord latéral. Ainsi, le profil de la surface supérieure du rebord latéral et la position du plateau inférieur en translation déterminent la position en hauteur du plateau supérieur, au moins au voisinage des patins du plateau supérieur. Le coulissement du plateau supérieur en appui sur le plateau inférieur est facilité. L'usure est limitée et contrôlée.

Dans une variante de ce mode de réalisation, la surface supérieure du rebord latéral est sensiblement plane transversalement. Le patin est pourvu d'une surface de glissement plane. Ainsi, en cas de léger désalignement du plateau inférieur par rapport au plateau supérieur, par exemple en raison d'une irrégularité du sol inférieur, la zone de contact est dépourvue de concentration de contrainte.

Dans un mode de réalisation, le plateau supérieur est muni d'un axe de pivotement sensiblement horizontal et disposé du côté opposé au volet. Le plateau supérieur peut comprendre une ou deux brides articulées sur le châssis. Le plateau supérieur présente ainsi une position en hauteur sensiblement constante et ajustée au sol supérieur, par exemple un sol d'établissement recevant du public, du côté de l'axe de pivotement. Du côté opposé, le plateau supérieur présente une position en hauteur qui suit la hauteur des rebords latéraux du plateau inférieur en fonction de la translation rectiligne du plateau inférieur. Le plateau inférieur présente un bord affleurant le niveau du sol inférieur, par exemple un trottoir, et un bord disposé sous le volet en position déployée.

Dans un mode de réalisation, la position en hauteur du plateau supérieur est réglable par au moins deux vis. L'adaptation du dispositif à la hauteur de l'obstacle, par exemple une marche, et à la forme du sol bas, est simple et rapide. Elle peut également être adaptée après l'installation du dispositif d'assistance pour s'accorder avec les revêtements de sol voisins. En outre l'horizontalité du plateau supérieur peut être sélectionnée finement et adaptée à souhait.

Dans un mode de réalisation, le volet est muni d'un verrou actif en fin de course de déploiement coopérant avec un poussoir de forme complémentaire supporté par le rebord latéral du plateau inférieur.

Dans un mode de réalisation, le dispositif comprend une came supportée par lesdits rebords latéraux et passive par rapport auxdits rebords latéraux, guidant le volet lorsque le plateau inférieur quitte sa position de repos ou rejoint sa position de repos, l'organe mécanique de verrouillage du volet et la came comprenant chacun une vis dont les têtes sont tangentes l'une avec l'autre. L'organe mécanique de verrouillage et la came sont alors moins sensibles au dévissage accidentel par vibration.

Dans chacun des modes de réalisation décrits ci-avant, la position du plateau supérieur est indexée mécaniquement sur la position du plateau inférieur réalisant un trajet rectiligne de la position rangée vers la position déployée et de la position déployée vers la position rangée.

En fonction de la présence des caractéristiques optionnelles précédentes, chaque rebord latéral du plateau inférieur forme une bande de roulement/glissement pour chaque roue/patin latérale du plateau supérieur, un ouvre-volet, un organe de blocage du volet en position fermée et un index de hauteur du volet supérieur.

D'autres caractéristiques et avantages de l'invention apparaîtront à l'examen de la description détaillée ci-après, et des dessins annexés, sur lesquels :
- la figure 1 illustre de façon schématique, dans une vue en perspective, un exemple de châssis, plateau inférieur et poutre de dispositif d'assistance au franchissement en position semi-déployée ;
- la figure 2 est une vue proche de la figure 1, en position de repos, une partie du plateau inférieur ayant été représentée séparément pour voir le châssis ;
- la figure 3 illustre de façon schématique, dans une vue en perspective, un exemple de châssis de dispositif d'assistance au franchissement ;
- la figure 4 illustre de façon schématique, dans une vue en perspective, un exemple de dispositif d'assistance au franchissement, en position rangée, la plateforme du plateau supérieur étant représentée en trait mixte ;
- la figure 5 est une vue de dessus correspondant à la figure 4 ;
- la figure 6 est une vue de côté correspondant à la figure 4 ;
- la figure 7 est une vue proche de la figure 5, du dispositif d'assistance au franchissement en position déployée ;
- la figure 8 est une vue de côté correspondant à la figure 7 ;
- la figure 9 illustre de façon schématique, dans une vue en coupe selon un plan vertical central, un exemple de dispositif d'assistance au franchissement, en position déployée, dans son environnement ;
- la figure 10 est une vue de dessus correspondant à la figure 9 ; et
- la figure 11 est une représentation schématique d'un mode de réalisation d'un verrou d'un dispositif d'assistance.

Les dessins annexés pourront non seulement servir à compléter l'invention, mais aussi contribuer à sa définition, le cas échéant.

L'invention a pour but de permettre le franchissement d'un dénivelé se traduisant par une marche. Dans la suite, les deux niveaux seront distingués par les termes sol supérieur et sol inférieur. L'entrée d'un local, d'une boutique, d'un bureau présente souvent un décalage de hauteur par rapport à l'extérieur, qu'il s'agisse d'une rue ouverte aux voitures, d'un passage piéton, d'une place, etc. Les personnes se déplaçant en fauteuil roulant doivent pouvoir accéder à ce type de bâtiment. Les livreurs munis de plateaux roulants ou de chariots ont le même besoin. Pour franchir une hauteur d'une ou deux marches, des installations lourdes de type ascenseur ne conviennent pas. Il convient également de respecter l'aspect des façades, souvent soumises à des règlements de protection, et leur alignement. La structure du bâtiment doit être préservée le plus possible, notamment la structure porteuse du sol supérieur du rez-de-chaussée dans lequel l'entrée doit être rendue aisée. Par ailleurs, une contrainte notable provient de l'indisponibilité fréquente du sous-sol, utilisé à d'autres fins ou détenu par des tiers. L'encombrement en hauteur doit être limité.

À cette fin, la demanderesse a conçu et mis au point un système d'assistance sous la forme d'une rampe érectile logée dans un caisson inséré dans le sol supérieur du local concerné. À l'état de repos ou rangé, la rampe est rétractée. Le sommet du caisson formant une surface appartenant au sol supérieur du local présente un aspect choisi, par exemple harmonisé avec le reste du sol supérieur, et une géométrie adaptée, en général affleurant le reste du sol supérieur. La face avant du caisson présente un aspect choisi pour une intégration dans la façade du bâtiment. Le caisson peut présenter une hauteur de l'ordre de 10 à 50 centimètres permettant une insertion dans la plupart des sols, par exemple dans une dalle en béton ou en brique d'un rez-de-chaussée de bâtiment.

À l'état de service ou déployé, la rampe est en saillie par rapport à la façade. La rampe vient prendre appui sur une portion de sol située devant le local. Ladite portion de sol est souvent un trottoir ou une chaussée. Bien entendu, le système d'assistance peut être mis en oeuvre à l'intérieur d'un bâtiment ou encore sur une terrasse. Dans le cas d'un bâtiment, le sol supérieur correspond par exemple au sol intérieur du bâtiment et le sol inférieur correspond au trottoir devant le bâtiment. Dans le cas d'une terrasse, le sol supérieur correspond par exemple au trottoir accueillant la terrasse et le sol inférieur correspond à la chaussée de la voie devant la terrasse. La rampe offre une surface de roulement suffisamment unie pour le passage d'un fauteuil roulant, d'un chariot ou d'un diable. La pente de la rampe est plus accessible aux véhicules roulant qu'un dénivelé abrupt.

Dans le mode de réalisation illustré sur les figures, le dispositif d'assistance 1 pour personnes à mobilité réduite présente une forme générale de parallélépipède rectangle autorisant une insertion aisée dans un sol supérieur 100 d'un local, devant un sol inférieur 300 entre lesquels se présente une marche 200. Le dispositif d'assistance 1 comprend un châssis 2, un plateau inférieur 3 monté à translation par rapport au châssis 2, un plateau supérieur 4 mobile en hauteur par rapport au châssis 2, un volet 5 de liaison entre les plateaux supérieur 4 et inférieur 3 et un verrou 70.

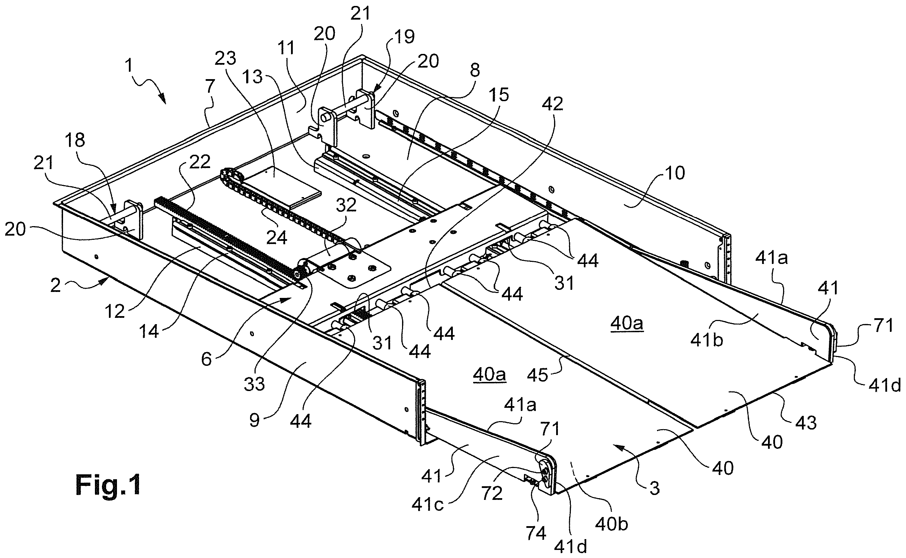

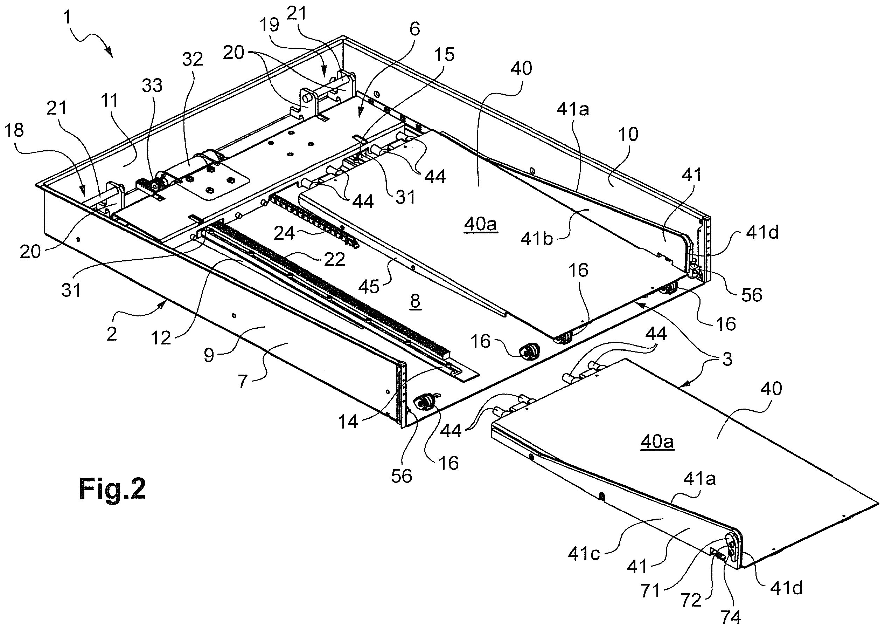

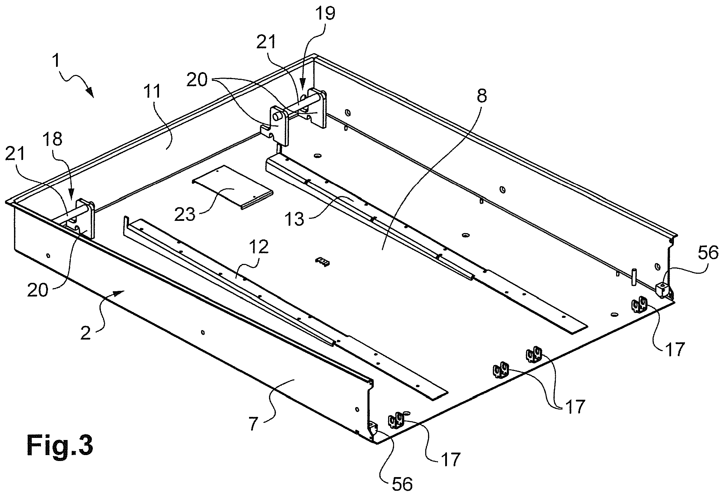

Sur les figures 1 et 2, le plateau supérieur 4 et le volet 5 ont été omis afin de rendre plus visibles les éléments sous-jacents. Sur la figure 3, les plateaux inférieurs 3 et supérieur 4 et le volet 5 sont omis afin laisser apparaître l'intérieur du châssis 2. Le dispositif d'assistance 1 comprend également une poutre 6 mobile en translation par rapport au châssis 2.

Le châssis 2 est qualifié de stationnaire dans le sens où il est destiné à former un bâti immobile du dispositif d'assistance 1 par rapport à son environnement d'installation tel que le sol ou le trottoir. Le châssis 2 comprend un caisson 7 et des éléments de support des plateaux inférieur 3 et supérieur 4. Le caisson 7 comprend un fond 8, des parois latérales 9, 10 parallèles l'une par rapport à l'autre et une paroi arrière 11. Le terme "*arrière*" est utilisé, ici, de manière arbitraire par opposition à l'avant du dispositif d'assistance 1 destiné à venir du côté d'un sol inférieur 300, par exemple en façade du bâtiment. Le terme "*carrière*" peut également être vu comme synonyme de "*intérieur*" dans le cas d'un bâtiment. La paroi arrière 11 est perpendiculaire au fond 8. La paroi arrière 11 est perpendiculaire aux parois latérales 9, 10. Les parois latérales 9, 10 sont perpendiculaires au fond 8. Le caisson 7 peut être réalisé en tôle d'acier. Les extrémités avant du fond 8, et des parois latérales 9, 10 définissent une embouchure du caisson 7. Lors du déploiement, le plateau inférieur 3 sort du caisson 7 au travers de l'embouchure. L'embouchure est fermée par le volet 5 en position rangée.

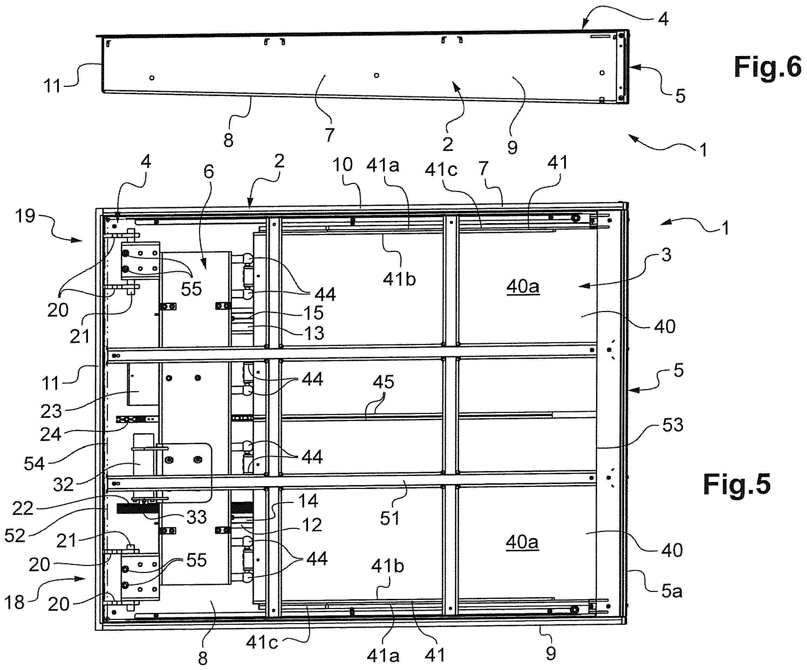

En règle générale, le fond 8 est monté dans un logement ménagé à cet effet dans le sol supérieur 100 du local, légèrement incliné vers l'extérieur, par exemple d'environ 1 à 3°. Une légère inclinaison facilite l'évacuation par gravité en cas d'infiltration accidentelle de liquide dans le caisson 7. En outre, la profondeur du logement à creuser pour loger le dispositif d'assistance 1 est réduite à l'arrière. Le mode de réalisation représenté sur les figures présente une telle inclinaison : sur les figures 6, 8 et 9, le fond 8 est légèrement incliné vers le sol inférieur 300 tandis que les bords supérieurs des parois latérales 9, 10 sont horizontaux pour mieux s'harmoniser avec la surface du sol supérieur 100. Ceci explique l'aspect non exactement parallélépipédique du caisson 7. Pour faciliter la compréhension, cette petite inclinaison sera négligée dans la suite.

Le châssis 2 comprend des rampes, ici deux rampes 12, 13 similaires. Les rampes 12, 13 sont fixées au châssis 2, par exemple ici par vissage au fond 8. Les rampes 12, 13 s'étendent parallèlement l'une par rapport à l'autre et par rapport aux parois latérales 9, 10. Les rampes 12, 13 présentent une hauteur décroissante depuis l'arrière du dispositif d'assistance 1 vers l'avant. Leur extrémité respective disposée à l'avant du caisson 7 présente ainsi une hauteur quasi-nulle à quelques centimètres de l'extrémité avant du caisson 7. Les rampes 12 et 13 présentent chacune une surface supérieure plane. Chaque surface supérieure plane présente une pente par rapport au fond 8 correspondant à la variation de hauteur des rampes 12, 13. La pente définit la direction du mouvement de translation du plateau inférieur 3. La pente est, ici, comprise entre -10 et 10°. La pente s'ajoute à l'inclinaison du fond 8 par rapport à l'horizontale. Par exemple, la pente par rapport à l'horizontale est de 3,3°tandis que l'inclinaison du fond 8 par rapport à l'horizontale est d'environ 2°.

Le châssis 2 comprend également des rails, ici deux rails 14, 15, respectivement montés sur les rampes 12, 13 et supportant le plateau inférieur 3 et la poutre 6. Les rails 14, 15 se présentent ici sous forme de profilés. Les rails 14, 15 comprennent une semelle en contact avec la surface supérieure des rampes 12, 13. Les rails 14, 15 sont solidaires du châssis 2. Les rails 14, 15 étant ici de profil constant et disposés sur les surfaces supérieures respectives des rampes 12, 13, s'étendent selon une direction parallèle aux parois latérales 9, 10 avec un angle par rapport au fond 8 correspondant à la pente des rampes 12, 13.

Les profils des rails 14, 15 comprennent, au-dessus de la semelle, un champignon de forme arrondie. Le champignon des rails 14, 15 peuvent être de profil circulaire sur environ trois quarts de tour et se raccorder à la semelle, voir figure 2. Dans d'autres modes de réalisation, les rails présentent un champignon de section circulaire sur plus de 180°, préférablement plus de 240°. Une telle forme des rails permet un guidage précis de la poutre 6 lors de son déplacement. Les rails 14, 15 peuvent aussi présenter d'autres formes adaptées au support de la poutre 6, telles qu'un profil en dôme ou plat.

Le châssis 2 comprend également une pluralité de rouleaux 16 montés sur des flasques 17 fixés au fond 8 à proximité de l'extrémité avant du châssis 2. Les rouleaux 16 sont ici au nombre de quatre, et offrent un appui au plateau inférieur 3. Les rouleaux 16 sont montés fous, de manière à assurer une fonction de support mécanique passive, non motrice.

Le châssis 2 comprend, à proximité de la paroi arrière 11, deux supports 18, 19 pour le plateau supérieur 4. Chaque support 18, 19 comprend un axe 21 supporté par deux flasques 20, ou brides. Les flasques 20 sont fixés sur le fond 8. Les axes 21 s'étendent sensiblement à l'horizontale. Le plateau supérieur 4 vient pivoter sur les axes 21 à proximité de la paroi arrière 11. Ainsi, l'extrémité arrière du plateau supérieur 4, proche de la paroi arrière 11, est maintenue à une hauteur sensiblement constante, au pivotement près, lors du déploiement/rangement du dispositif d'assistance 1. L'extrémité avant du plateau supérieur 4 peut monter ou descendre comme il sera décrit dans la suite.

Dans l'exemple décrit ici, le châssis 2 comprend une crémaillère 22. La crémaillère 22 est logée dans le caisson 7, ici fixée sur la surface supérieure plane d'une rampe 12 parmi les deux rampes 12, 13, sensiblement le long du rail 14 correspondant. La crémaillère 22 s'étend sensiblement parallèle aux rails 13, 14. Les dents de la crémaillère 22 sont, ici, orientées vers le haut de manière à engrener avec une partie correspondante motorisée, tel que cela sera décrit dans la suite.

Le dispositif d'assistance 1 comprend une alimentation électrique 23, prenant par exemple la forme d'un boîtier. L'alimentation électrique 23 est elle-même alimentée par un raccordement extérieur au dispositif d'assistance 1, non représenté sur les figures. Le boîtier peut en outre loger un organe de commande interne piloté depuis l'extérieur du dispositif d'assistance 1 par un organe de commande externe connu en soi, avec ou sans fil. Le boîtier est disposé dans le caisson 7 du châssis 2 laissant libres les mouvements des plateaux inférieur 3 et supérieur 4. Ici, le boîtier est disposé à proximité de la paroi arrière 11, de sorte que la poutre 6 passe au-dessus du boîtier à la fin d'une opération de rangement. En variante, l'alimentation électrique 23 peut comprendre une batterie. Dans ce cas, un raccordement extérieur peut être évité. La batterie peut être prévue pour être interchangeable en maintenance et/ou rechargée, par exemple par un système à énergie solaire annexe.

Le dispositif d'assistance 1 comprend, ici, une chenille déroulable 24. La chenille déroulable 24 est logée dans le caisson 7. La chenille déroulable 24 abrite un câble d'alimentation reliant l'alimentation électrique 23 à un organe moteur décrit dans la suite. La chenille déroulable 24 permet de guider le mouvement du câble lors des opérations de déploiement/rangement du dispositif d'assistance 1 afin d'éviter que le câble n'entre en contact avec des parties mobiles et provoque des dysfonctionnements.

La poutre 6 présente des dimensions adaptées pour être logée dans le caisson 7 du châssis 2 selon une orientation sensiblement transversale, c'est-à-dire que la direction de la longueur de la poutre 6 est orientée sensiblement parallèle au fond 8 et à la paroi arrière 11. Dans l'exemple décrit ici, la poutre 6 présente une longueur inférieure à l'espace intérieur du châssis 2 séparant les parois latérales 9, 10. La poutre 6 présente une largeur d'environ une dizaine de centimètres, et une épaisseur de quelques millimètres à quelques centimètres. La direction de la largeur est orientée selon la direction principale des rails 14, 15, tandis que la direction de l'épaisseur est orientée à la verticale à la pente près. Ainsi, l'encombrement de la poutre 6 dans le châssis 2 est minimisé.

La poutre 6 est configurée pour être supportée par les rails 14, 15 comme décrit ci-avant. En outre, la poutre 6 est configurée pour être guidée par les rails 14, 15 et/ou les rampes 12, 13 lors de ses déplacements. À cet effet, la poutre 6 dispose de guides coulissants 31. Dans l'exemple décrit ici et visible en figures 1 et 2, les guides coulissants 31 prennent la forme de rainures ménagées dans une surface inférieure de la poutre 6 et en correspondance de forme avec les rampes 12, 13 et les rails 14, 15. La poutre 6 est ainsi guidée en translation selon la direction avant-arrière du dispositif d'assistance 1. Les mouvements de la poutre 6 sont limités selon la direction horizontale perpendiculaire à la translation, c'est-à-dire la direction latérale.

Dans des variantes, les guides coulissants 31 peuvent comprendre des patins glissants et/ou des roulements facilitant le coulissement sur les rails 14, 15. Les guides coulissants 31 sont de formes adaptées à celles des rails 14, 15. Dans le cas de profils des rails 14, 15 présentant une partie circulaire, des patins de la poutre 6 peuvent entourer la partie circulaire sur plus de 180°. Dans ce cas, la translation est plus précise et le risque d'un déraillement accidentel de la poutre 6 est réduit.

Le dispositif d'assistance 1 comprend un moteur 32. Le moteur 32 est fixé, par exemple par vissage, à la poutre 6. Le moteur 32 est alimenté par l'alimentation électrique 23, ici par l'intermédiaire du câble logé dans la chenille déroulable 24. Le moteur 32 est agencé de manière à coopérer avec la crémaillère 22. L'activation du moteur 32 génère son déplacement le long de la crémaillère 22 et par conséquent le déplacement sensiblement rectiligne de la poutre 6 par rapport au châssis 2. Simultanément, la chenille déroulable 24 suit le déplacement relatif entre le moteur 32 et le châssis 2.

Dans l'exemple décrit ici, le moteur 32 est disposé contre une surface arrière de la poutre 6. Le moteur 32 entraîne un pignon 33 denté, en prise avec la crémaillère 22. Le pignon 33 est mis en rotation par le moteur 32 selon un axe de rotation sensiblement perpendiculaire à la crémaillère 22. Le moteur 32 est équipé d'un réducteur droit à engrenages planétaires de manière à adapter le couple et la vitesse de rotation du pignon 33. Une telle configuration présente une bonne compacité et occupe peu d'espace au sein du caisson 7. Dans le mode de réalisation représenté sur les figures, le moteur 32 est unique et suffisant pour générer les mouvements combinés de déploiement/rangement du dispositif d'assistance 1.

Dans le cas de patins de la poutre 6 entourant une partie circulaire des rails 14, 15 sur plus de 180°, la poutre 6 est bien plaquée contre les rails 14, 15 et le pignon 55 reste bien engrené avec la crémaillère 22.

Le plateau inférieur 3 comprend un corps 40 et deux rebords latéraux 41. Le plateau inférieur 3 est caché sous le plateau supérieur 4 à l'état rangé du dispositif d'assistance 1 et n'apparaît qu'au déploiement. Le corps 40 présente une forme générale de plaque plane destinée à supporter le passage d'un véhicule roulant à l'état déployé du dispositif d'assistance 1. Le corps 40 est de forme générale rectangulaire et de dimensions inférieures à l'espace intérieur du caisson 7 afin d'y être logé à l'état rangé du dispositif d'assistance 1. Le corps 40 présente une face supérieure 40a orientée vers le haut et visible en figures 1 et 2 et une face inférieure 40b opposée à la face supérieure 40a.

Le corps 40 présente un bord arrière 42 relié à la poutre 6 et un bord avant 43 opposé au bord arrière 42.

En position déployée, le bord avant 43 est destiné à être au contact du sol inférieur 300, afin de faciliter la montée d'un véhicule empruntant le dispositif d'assistance 1. Pour un utilisateur d'un tel véhicule, il est souhaitable que le bord avant 43, zone d'entrée dans le sens de la montée sur la face supérieure 40a, soit le plus fin possible. Le bord avant 43 peut être biseauté à cet effet. En outre le bord avant 43 peut être agencé pour affleurer, et de préférence s'appuyer sur, le sol inférieur 300 à l'état déployé. Dans la position déployée, le bord arrière 42 et la poutre 6 à laquelle il est lié restent dans l'espace intérieur du caisson 7, à proximité de l'extrémité avant du caisson 7 et de l'embouchure du caisson 7.

Le corps 40 est en appui sur les rouleaux 16 à l'avant du caisson 7. Le corps 40 est légèrement incliné en fonction du positionnement relatif en hauteur des rouleaux 16 par rapport au bord arrière 42 du plateau inférieur 3. La poutre 6 est située dans le caisson 7, à proximité de l'extrémité arrière du caisson 7 en position rangée.

En position rangée, la poutre 6 est disposée en partie au-dessus du boîtier de l'alimentation électrique 23 et de la chenille déroulable 24. Le bord avant 43 est également logé dans le caisson 7, légèrement en retrait de l'embouchure et de l'extrémité avant du caisson 7.

Dans l'exemple représenté sur les figures, le bord arrière 42 est relié à l'avant de la poutre 6 par l'intermédiaire de rotules 44. Ainsi, le plateau inférieur 3 est fixe par rapport à la poutre 6 dans la direction du mouvement rectiligne de ladite poutre 6, mais présente une liberté de mouvement du bord avant 43 par rapport à la poutre 6 dans la direction sensiblement verticale. Les rotules 44 autorisent un basculement autour des rouleaux 16 sur lesquels le plateau inférieur 3 repose en fonction de sa position instantanée entre la position rangée et la position déployée. Ceci ajuste la position en hauteur du plateau inférieur 3 par rapport au sol inférieur 300, au cours des mouvements et en position déployée. Lorsque le moteur 32 entre en action, le mouvement de la poutre 6 le long des rails 13, 14 entraîne un déplacement du plateau inférieur 3. Ainsi, lors de l'opération de rangement, la poutre 6 tracte le plateau inférieur 3 à travers l'embouchure vers l'intérieur du caisson 7 pour l'y rétracter. Lors de l'opération de déploiement, la poutre 6 pousse le plateau inférieur 3 à travers l'embouchure à l'avant du caisson 7 et vers l'extérieur.

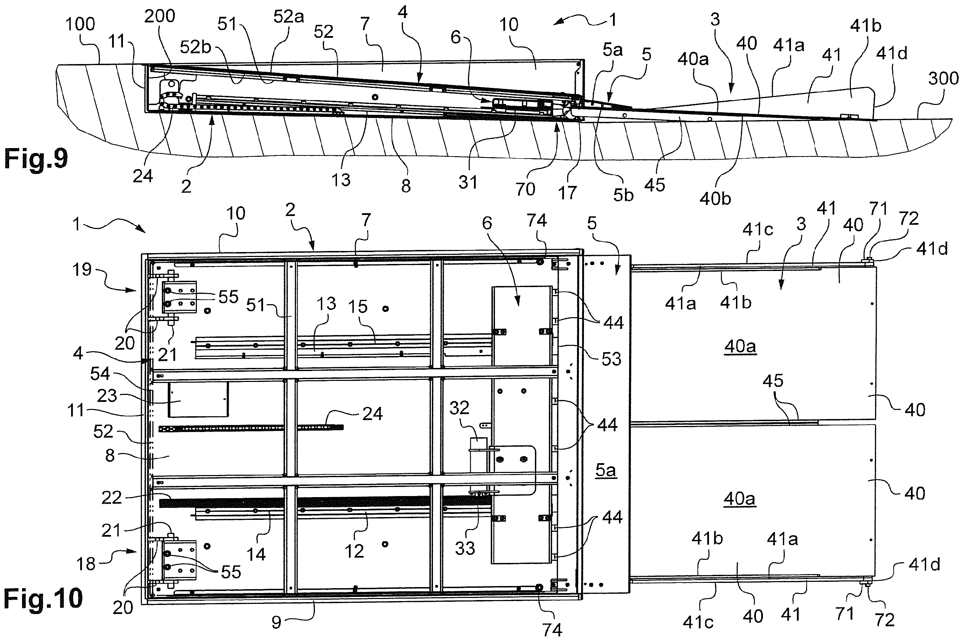

Les deux rebords latéraux 41 sont ici sensiblement les symétriques l'un de l'autre par rapport à un plan de symétrie correspondant au plan de la figure 9. Le plan de symétrie est vertical et orienté selon la direction avant-arrière. Les deux rebords latéraux 41 s'étendent sensiblement à la perpendiculaire et vers le haut de chaque côté du corps 40. Chaque rebord latéral 41 peut être fixé, par exemple par soudage ou vissage, au corps 40. Chaque rebord latéral 41 peut être monobloc du corps 40, par exemple obtenu par pliage d'une tôle. Chaque rebord latéral 41 s'étend sensiblement à la parallèle de l'axe de translation du corps 40.

Chaque rebord latéral 41 présente une surface supérieure 41a orientée vers le haut, une face interne 41b orientée vers le centre du plateau inférieur 3, une face externe 41c opposée à la face interne 41b et une surface avant 41d orientée vers l'avant et raccordée à la surface supérieure 41a par un congé de raccordement arrondi.

Les surfaces supérieures 41a supportent le plateau supérieur 4 tout au long du déploiement et du rangement, y compris aux états déployé et rangé. Chaque surface supérieure 41a supporte le volet 5 au cours du déploiement/rangement. Par conséquent, la forme et la hauteur des rebords latéraux 41 et de leur surface supérieure 41a respective déterminent mécaniquement la position du plateau supérieur 4 et du volet 5. Lors des déplacements du plateau inférieur 3, les surfaces supérieures 41a se déplacent en translation sous le plateau supérieur 4 et le volet 5.

Dans le mode de réalisation représenté sur les figures, chaque rebord latéral 41 présente une forme généralement triangulaire. Chaque rebord latéral 41 présente une grande hauteur, ici d'environ 5 à 50 centimètres, à l'extrémité avant du plateau inférieur 3, et un sommet à l'extrémité arrière. Autrement dit, la hauteur de chaque rebord latéral 41 et donc la position de la surface supérieure 41a correspondantes, augmentent depuis l'arrière vers l'avant du plateau inférieur 3. Au cours du déploiement, la distance séparant le fond 8 du caisson 7 et la portion des surfaces supérieures 41a située à l'embouchure du caisson 7 diminue. Par conséquent, la partie du plateau supérieur 4 reposant sur les surfaces supérieures 41a descend par rapport au châssis 2 au niveau de l'embouchure lors du déploiement. Cet effet est inversé lors de l'opération de rangement. La position de déploiement du plateau inférieur 3 détermine donc mécaniquement la position en hauteur du plateau supérieur 4.

Les surfaces supérieures 41a sont, ici, planes transversalement. Ceci permet de réduire l'usure.

Les faces internes 41b forment un guide d'engagement et d'alignement d'un véhicule roulant sur le plateau inférieur 3.

Dans l'exemple décrit ici, le plateau inférieur 3 comprend un gousset 45 faisant saillie depuis la face inférieur 40b du corps 40 vers le bas et s'étendant selon la direction avant-arrière. Le gousset 45 augmente la rigidité du corps 40. La position du gousset 45 selon la direction latérale est, ici, sélectionnée en fonction de l'organisation des éléments dans le caisson 7, par exemple les rails 13, 14 et la crémaillère 22. Cette sélection est effectuée de manière à éviter toute collision lors du rangement entre le gousset 45 et les éléments du châssis 2, sans nécessiter un espace supplémentaire dans la hauteur : par interpénétration des gabarits, le gousset 45 s'insère entre les éléments contenus dans le caisson 7 lors du rangement.

Une ou plusieurs roues 46 sont en outre disposées sous la face inférieure 40b du plateau inférieur 3. Ainsi, en fin de déploiement et en position déployée, lesdites roues 46 s'appuient sur le sol inférieur 300. Le bord avant 43 du plateau inférieur 3 est alors supporté par le sol inférieur 300. Le porte-à-faux et les contraintes qui en résultent sont réduits.

Dans le mode de réalisation des figures, le plateau inférieur 3 comprend deux parties sensiblement équivalentes, dont l'une est représentée à part sur la figure 2. Les deux parties sont sensiblement symétriques l'un de l'autre par rapport à un plan de symétrie vertical et orienté selon la direction avant-arrière correspondant au plan de la figure 9. Autrement dit, le corps 40 est scindé en deux. Les deux parties peuvent ainsi présenter un décalage relatif, en particulier en hauteur. Ceci permet une meilleure adaptation avec le sol inférieur 300 en position déployée. La fabrication est simplifiée. Pour certaines applications, le corps 40 peut être réduit à deux parties de faibles largeurs et espacées l'une de l'autre. Ceci est par exemple adapté pour le passage de véhicules ayant des paires de roues coaxiales, ou à essieux, et dont l'écartement est standard ou dans une fourchette connue. Le plateau inférieur 3 peut aussi être divisé en plus de deux parties présentant une indépendance de mouvement vertical.

Dans le cas d'un plateau inférieur 3 en deux parties ou plus, chaque partie peut être pourvue d'un gousset similaire au gousset 45, de préférence distant du rebord latéral 41, afin d'améliorer la rigidité. Afin d'améliorer la stabilité, chacune des parties du plateau inférieur 3 est ici supportée par au moins deux rouleaux 16 du châssis 2 formant une paire.

Le plateau supérieur 4 est de forme sensiblement plane et rectangulaire et de dimensions ajustées pour monter et descendre dans le caisson 7.

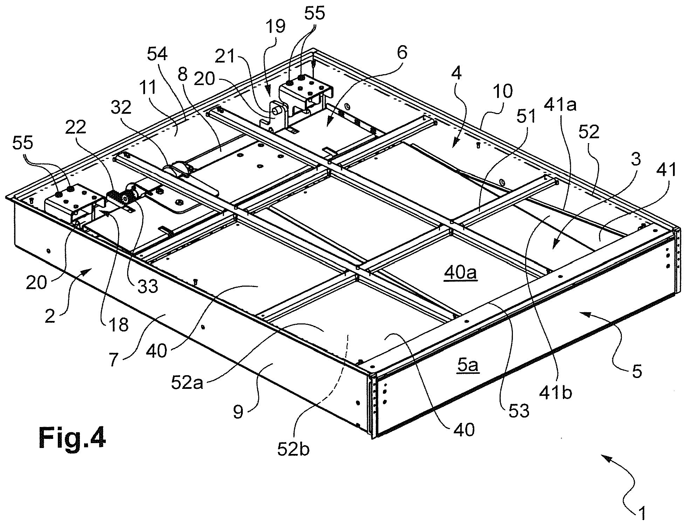

Dans l'exemple décrit ici, le plateau supérieur 4 comprend un bâti 51, par exemple en tubes soudés, recouvert d'une plateforme 52 rectangulaire. La plateforme 52 est représentée en trait mixte et transparente sur les figures 4, 5, 7 et 10. La plateforme 52 présente une face supérieure 52a et une face inférieure 52b opposée à la face supérieure 52a.

Le plateau supérieur 4 comprend optionnellement des rebords. Les rebords peuvent être formés par un pli de tôle de la plateforme 52. Les rebords s'étendent perpendiculairement vers le haut depuis la plateforme 52 et le long du contour de celle-ci. Les rebords présentent une hauteur sélectionnée pour accueillir un revêtement de sol à appliquer sur la face supérieur 52a de la plateforme 52 et s'accommodant avec le sol supérieur 100. Les rebords peuvent par exemple être adaptés pour des carreaux de carrelage, un sol souple, etc. Alternativement, la plateforme 52 est dépourvue de rebord. La face supérieure 52a peut présenter une surface antidérapante ou une surface de fixation d'un revêtement de sol rapporté.

Le plateau supérieur 4 présente un bord avant 53 et un bord arrière 54 opposé au bord avant 53.

Le bord arrière 54 est sensiblement aligné avec la paroi arrière 11 du châssis 2 et affleurant le niveau du sol supérieur 100. Une partie du plateau supérieur 4 à proximité du bord arrière 54 est monté à pivotement autour des axes 21 du châssis 2. La hauteur de l'extrémité arrière du plateau supérieur 4 est donc constante au pivotement près. Le plateau supérieur 4 est en outre fixe selon la direction avant-arrière par rapport au châssis 2 au pivotement près.

La fixation du plateau supérieur 4 au châssis 2 par l'intermédiaire des axes 21 peut être pourvue d'un système de réglage manuel de la hauteur du plateau supérieur 4, par exemple par des vis de réglage 55. Ainsi, l'ajustement du plateau supérieur 4 au niveau du sol supérieur 100 peut être réglé de manière rapide et pratique lors de l'installation du dispositif d'assistance 1 et/ou *a posteriori* lors de l'installation d'un revêtement de sol.

Le plateau supérieur 4 présente des zones latérales de la face inférieure 52b destinées à s'appuyer sur les surfaces supérieures 41a des rebords latéraux 41 du plateau inférieur 3, tel que décrit ci-avant. Lesdites zones se situent à proximité du bord avant 53 et peuvent s'étendre sur la longueur du plateau supérieur 4.

Dans un mode de réalisation, le plateau supérieur 4 comprend au moins une roue et/ou un patin disposé en la face inférieure 52b. La roue, respectivement le patin, présente une surface de roulement, respectivement une surface de glissement, agencée pour rouler/glisser sur la surface supérieure 41a correspondante formant came.

Ainsi, le profil de la surface supérieure 41a du rebord latéral 41 et la position du plateau inférieur 3 en translation déterminent la position en hauteur du plateau supérieur 4, au voisinage des roues/patins du plateau supérieur 4. Par extension, la hauteur du reste du plateau supérieur 4, dont le bord avant 53, est aussi déterminée par la position du plateau inférieur 3 en translation. Le plateau supérieur 4 est donc mobile en hauteur.

Par pivotement, autour des axes 21 du châssis 2, la pente du plateau supérieur 4 par rapport au châssis 2 et à l'horizontale est également définie par la position du plateau inférieur 3 en translation.

Dans le cas de surfaces supérieures 41a du plateau inférieur 3 planes transversalement, la surface de roulement de la roue, respectivement la surface de glissement du patin, du plateau supérieur 4 est de préférence plane.

Les roues/les patins du plateau supérieur 4 en contact avec les surfaces supérieures 41a du plateau inférieur 3 peuvent être pourvus d'un système de réglage manuel de la hauteur du plateau supérieur 4, par exemple par des vis de réglage. Ainsi, l'ajustement du plateau supérieur 4 au niveau du sol supérieur 100 en position rangée du dispositif d'assistance 1, peut être réglé de manière rapide et pratique lors de l'installation du dispositif d'assistance 1 et/ou *a posteriori* lors de l'installation d'un revêtement de sol. De tels systèmes de réglage permettent également de régler l'horizontalité de la face supérieure 52a ou au contraire une inclinaison choisie.

Le volet 5 est relié au plateau supérieur 4 par le bord avant 53 ou à proximité immédiate de celui-ci.

Le volet 5 est de forme générale rectangulaire allongée et de dimensions adaptées pour fermer l'embouchure du caisson 7. Le volet 5 présente une face extérieure 5a et une face intérieure 5b opposée à la face extérieure 5a.

Le volet 5 est monté à pivotement mécanique sous le plateau supérieur 4 selon un axe sensiblement horizontal et perpendiculaire à l'axe de translation du plateau inférieur 3. L'axe du pivot s'étend sensiblement le long du bord avant 53 du plateau supérieur 4. Le volet 5 est apte à pivoter entre une position de repos sensiblement verticale lorsque le dispositif d'assistance 1 est à l'état rangé et une position déployée reposant sur le plateau inférieur 3 durant et à la fin du déploiement.

À l'état fermé du volet 5, le contour du volet 5 est au contact ou au quasi contact du fond 8 et des parois latérales 9, 10. Dans un mode de réalisation, le plateau inférieur 3 et le châssis 2 sont mutuellement configurés de sorte que le poids venant du plateau supérieur 4 est transmis au châssis 2. Ainsi, les contraintes appliquées au plateau inférieur 3 sont réduites. Le plateau inférieur 3 est désintéressé. Pour cela, des zones d'appuis supplémentaires sont prévues entre le plateau inférieur 3 et le châssis 2 en position fermée. Les zones d'appuis complémentaires sont portées ici par des taquets 56 fixés sur le fond 8 et sur lesquels vient s'appuyer le plateau inférieur 3 supportant lui-même le plateau supérieur 4 à l'état rangé du dispositif d'assistance 1.

Dans un mode de réalisation, le contour du volet 5 et/ou l'embouchure du caisson 7 est pourvu d'un joint de manière à assurer une étanchéité. Ceci permet de protéger le dispositif d'assistance 1 des infiltrations, en particulier lorsque la face extérieure 5a est, seule, exposée aux éléments météorologiques, par exemple au niveau d'un seuil d'un bâtiment s'ouvrant sur la voie publique. Dans un autre mode de réalisation, un jour est préservé entre le fond 8 et le volet 5 afin de permettre l'évacuation de liquide depuis l'intérieure vers l'extérieur du caisson 7. Ceci permet d'éviter la présence d'eau stagnante dans le caisson 7.

Au début du déploiement, le plateau inférieur 3 est déplacé vers l'avant. La surface avant 41d de chacun des rebords latéraux 41 du plateau inférieur 3 vient appuyer puis pousser sur des portions latérales de la face intérieure 5b du volet 5. Le volet 5 quitte sa position verticale et entame sa course de pivotement. Le plateau supérieur 4 pivote autour des axes 21 et le bord avant 53 du plateau supérieur 4 descend. Le volet 5 suit alors un mouvement composé de la descente de son axe de pivotement et de pivotement vers l'extérieur. Au cours du mouvement de translation du plateau inférieur 3, les portions latérales de la face intérieure 5b du volet 5 glissent successivement contre les surfaces avant 41d, les congés de raccordement entre les surfaces avant 41d et les surfaces supérieures 41a, puis sur les surfaces supérieures 41a des rebords latéraux 41.

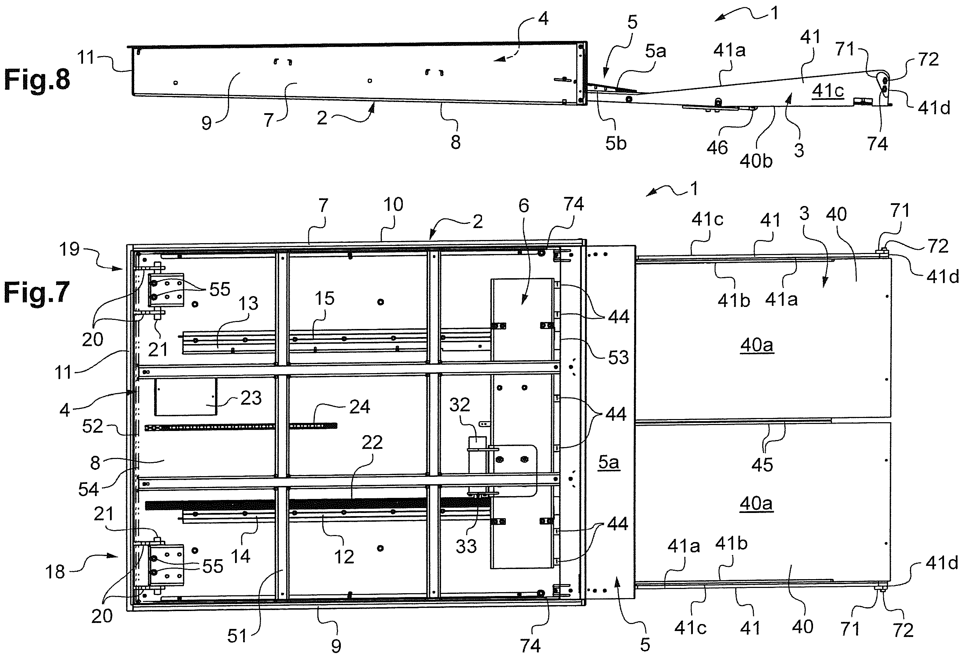

À l'état ouvert du volet 5, à la fin du déploiement, le volet 5 forme jonction entre le plateau inférieur 3 et le plateau supérieur 4, tel que représenté sur les figures 7 à 10. Les portions latérales de la face intérieure 5b du volet 5 s'appuient sur les extrémités arrière des surfaces supérieures 41a. Dans l'exemple décrit ici, la hauteur des rebords latéraux 41 est nulle dans une portion d'extrémité arrière du plateau inférieur 3. Par conséquent, la face intérieure 5b du volet 5, en tout ou partie, vient en appui sur la portion d'extrémité arrière de la face supérieure 40a du corps 40 du plateau inférieur 3. La face extérieure 5a du volet 5 devient une surface de roulement pour le véhicule empruntant le dispositif d'assistance 1 et assure la jonction entre le plateau inférieur 3 et le plateau supérieur 4.

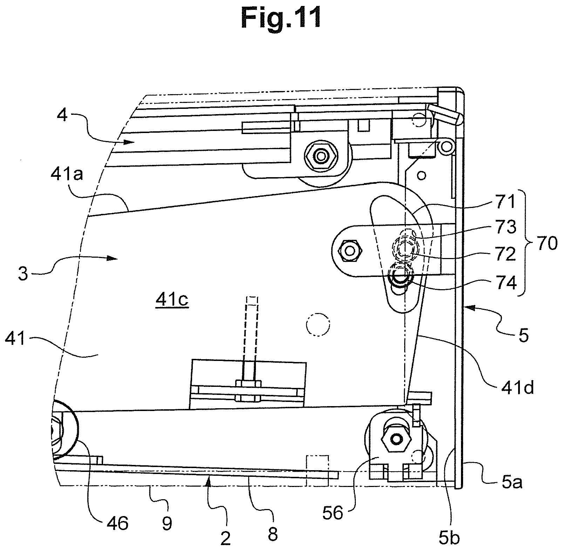

La figure 11 représente schématiquement le verrou 70 à l'état verrouillé. Le verrou 70 comprend un poussoir 71 solidaire du plateau inférieur 3 et fixé sur la face externe 41c d'au moins un rebord latéral 41, un téton 72 formant saillie depuis le poussoir 71 vers l'extérieur et un logement 73 correspondant ménagé dans le volet 5.

Le poussoir 71 et le téton 72 font office d'organes mécaniques de verrouillage supporté par l'un au moins des rebords latéraux 41 et passif par rapport auxdits rebords latéraux 41. Le poussoir 71 et le téton 72 sont, par exemple, visible en figures 1, 2, 7, 8, 10 et 11. À l'état fermé du volet 5, le téton 72 est positionné dans le logement 73 correspondant du volet 5 et dans une position de verrouillage. Dans cette position de verrouillage, la coopération du téton 72 et du logement 73 s'oppose au pivotement du volet 5 vers l'extérieur.

Au début du mouvement du plateau inférieur 3, le déplacement du poussoir 71 (vers la droite sur la figure 11) provoque le pivotement vers l'extérieur du volet 5. Le téton 72 sort du logement 73. Le verrou 70 quitte sa position de verrouillage par combinaison d'une translation du téton 72 et d'un pivotement du volet 5.

À la fin de l'opération de rangement, le plateau inférieur 3 se rétracte au travers de l'embouchure, vers l'intérieur du caisson 7, sous le volet 5. Le téton 72 pénètre de nouveau dans le logement 73. En fin de translation, le téton 72 tire le volet 5 dans une position fermée et verrouillée. Dans une variante, le verrou 70 comprend le téton 72 et le poussoir 71 est omis.

Dans l'exemple décrit ici, le verrou comprend en outre une came 74. La came 74 est de forme similaire au téton 72 et disposée à proximité du téton 72. La came 74 guide le volet 5 lorsque celui-ci est proche de sa position de repos. Le téton 72 et la came 74 prennent ici la forme de vis. Les têtes de chacun des deux vis sont tangentes. Le risque d'un dévissage accidentel de l'une ou l'autre est réduit.

Lorsque le téton 72 vient tirer le volet 5 dans sa position fermée, l'extrémité libre du volet 5 vient en appui contre le fond 8 du châssis 2. Ainsi, le poids du plateau supérieur 4 à l'état rangé et verrouillé est transmis au châssis 2, ici par l'intermédiaire du volet 5. Le plateau inférieur 3 est désintéressé.

Le poussoir 71 du verrou 70 peut en outre être agencé pour entrer en contact avec la face intérieure 5b du volet 5 lors du déploiement. Autrement dit, au début du déploiement, le poussoir 71 vient pousser contre le volet 5 pour l'ouvrir. Le poussoir 71 fait alors office de tampon pour les surfaces avant 41d des rebords latéraux 41.

Les modes de réalisation décrits et leurs variantes sont prévus pour le passage d'un fauteuil roulant. Le dispositif peut être adapté à d'autres utilisations, par exemple pour permettre le croisement simultané de deux fauteuils roulants ou le passage de véhicules roulant plus larges. Dans ce cas, non seulement les dimensions du dispositif peuvent être adaptées, mais le dispositif peut aussi comprendre un caisson commun logeant deux ou plus de deux ensemble de plateaux inférieurs et supérieurs et de volets. Le déploiement/rangement de chacun de ces ensembles peuvent être agencés pour être dépendants les uns des autres ou au contraire indépendants.

Dans les modes de réalisations décrits, les roues ou patins d'un premier organe coopèrent avec des surfaces correspondantes d'un second organe. Lorsque l'encombrement le permet, le second organe peut porter les roues ou les patins alors que le premier organe porte les surfaces correspondantes.

Le dispositif a été décrit à l'état installé et fonctionnel. Cependant, l'invention vise également un tel dispositif à l'état de pièces détachées, par exemple sous forme d'un kit d'installation comprenant un châssis, un plateau supérieur, un plateau inférieur, un volet et un organe de verrouillage agencés pour être assemblés les uns avec les autres et former un dispositif d'assistance.

L'invention ne se limite pas aux exemples de dispositif d'assistance décrits ci-avant, seulement à titre d'exemple, mais elle englobe toutes les variantes que pourra envisager l'homme de l'art dans le cadre des revendications ci-après.

## Revendications

1. Dispositif d'assistance (1) pour personnes à mobilité réduite, notamment au franchissement d'un obstacle (200) par un véhicule à roues, comprenant :
- un châssis (2) stationnaire,
- un plateau supérieur (4) mobile en hauteur,
- un plateau inférieur (3) monté à translation selon un axe incliné par rapport à l'horizontale entre une position de repos sous le plateau supérieur (4) et une position déployée, le plateau inférieur (3) comprenant un corps (40) et deux rebords latéraux (41) disposés selon des plans parallèles audit axe, chaque rebord latéral (41) comprenant une surface supérieure (41a), le plateau supérieur (4) étant supporté au moins en partie sur lesdits rebords latéraux (41), la position de déploiement du plateau inférieur (3) déterminant mécaniquement la position en hauteur du plateau supérieur (4), lesdits rebords latéraux (41) formant en outre un guide d'engagement et d'alignement de véhicule sur le plateau inférieur (3),
- un volet (5) monté à pivotement mécanique sur le plateau supérieur (4) selon un axe sensiblement horizontal et perpendiculaire à l'axe de translation du plateau inférieur (3), apte à pivoter entre une position de repos sensiblement verticale et une position déployée reposant sur le plateau inférieur (3), ledit volet (5) formant jonction entre le plateau inférieur (3) et le plateau supérieur (4), ledit volet (5) étant pivoté par lesdits rebords latéraux (41) au moins sur une partie de sa course de pivotement, et
- un organe mécanique (71 ; 72) de verrouillage du volet (5) en position de repos, supporté par lesdits rebords latéraux (41) et passif par rapport auxdits rebords latéraux (41), verrouillant ledit volet (5) en position de repos du plateau inférieur (3) et libérant ledit volet (5) lorsque ledit plateau inférieur (3) quitte sa position de repos.

2. Dispositif selon la revendication 1, dans lequel le plateau inférieur (3) est relié à un moteur (32) entraînant un pignon (33) en prise avec une crémaillère (22) fixée au châssis (2).

3. Dispositif selon la revendication 1 ou 2, comprenant une poutre transversale (6) reposant par des guides coulissant (31) sur des rails (14, 15) du châssis (2), ladite poutre (6) étant reliée au plateau inférieur (3) par des rotules (44), ladite poutre (6) supportant un moteur (32) apte à déplacer le plateau inférieur (3).

4. Dispositif selon l'une des revendications précédentes, dans lequel une partie du corps (40) et chaque rebord latéral (41) du plateau inférieur (3) sont d'une pièce en tôle pliée et le plateau inférieur (3) comprend au moins un gousset (45) fixé en une face inférieure (40b) du corps (40).

5. Dispositif selon l'une des revendications précédentes, dans lequel le corps (40) du plateau inférieur (3) comprend deux parties sensiblement équivalentes, chacune reliée à un rebord latéral (41) et aptes à un décalage relatif.

6. Dispositif selon l'une des revendications précédentes, dans lequel le plateau inférieur (3) présente une face inférieure (40b) pourvue d'une roue (46) prévue pour s'appuyer sur le sol (300) au voisinage de la position déployée.

7. Dispositif selon l'une des revendications précédentes, dans lequel les rebords latéraux (41) glissent sous le volet (5) lors de la translation du plateau inférieur (3), le volet (5) comprenant une face intérieure (5b) apte au contact avec un poussoir (71) du plateau inférieur (3), et apte au contact avec les rebords latéraux (41).

8. Dispositif selon l'une des revendications précédentes, dans lequel, en position de repos, le volet (5) reprend au moins en partie le poids venant du plateau supérieur (4) et transmet ledit poids au châssis (2).

9. Dispositif selon l'une des revendications précédentes, dans lequel le plateau supérieur (3) est supporté au moins en partie sur les rebords latéraux (41) par au moins une roue ou un patin en contact avec la surface supérieure (41a) d'un rebord latéral (41).

10. Dispositif selon la revendication 9, dans lequel la surface supérieure (41a) du rebord latéral (41) est sensiblement plane transversalement et dans lequel la roue, respectivement le patin, est pourvu d'une surface de roulement plane, respectivement d'une surface de glissement plane.

11. Dispositif selon l'une des revendications précédentes, dans lequel le plateau supérieur (4) est pourvu d'un axe de pivotement sensiblement horizontal et disposé du côté opposé au volet (5).

12. Dispositif selon l'une des revendications précédentes, dans lequel la position en hauteur du plateau supérieur (4) est réglable par deux vis (55).

13. Dispositif selon l'une des revendications précédentes, comprenant en outre une came (74) supportée par lesdits rebords latéraux (41) et passive par rapport auxdits rebords latéraux (41), guidant le volet (5) lorsque le plateau inférieur (3) quitte sa position de repos ou rejoint sa position de repos, l'organe mécanique (72) de verrouillage du volet (5) et la came (74) comprenant chacun une vis dont les têtes sont tangentes l'une avec l'autre.

## Patentansprüche

1. Hilfsvorrichtung (1) für Personen mit eingeschränkter Mobilität, insbesondere zum Überwinden eines Hindernisses (200) mittels eines Fahrzeugs mit Rädern, Folgendes aufweisend:
- ein stationäres Gestell (2),
- eine höhenbewegliche obere Platte (4),
- eine untere Platte (3), die entlang einer in Bezug auf die Horizontale geneigten Achse zwischen einer Ruheposition unter der oberen Platte (4) und einer ausgefahrenen Position verschiebbar angebracht ist, wobei die untere Platte (3) einen Körper (40) und zwei Seitenränder (41) aufweist, die entlang von zu der Achse parallelen Ebenen angeordnet sind, wobei jeder Seitenrand (41) eine Oberfläche (41a) aufweist, wobei die obere Platte (4) zumindest teilweise auf den Seitenrändern (41) gelagert ist, wobei die Ausfahrposition der unteren Platte (3) mechanisch die Höhenposition der oberen Platte (4) bestimmt, wobei die Seitenränder (41) darüber hinaus eine Fahrzeugeingriffs- und Fahrzeugausrichtungsführung an der unteren Platte (3) bilden,
- eine Klappe (5), die an der oberen Platte (4) entlang einer zur Verschiebungsachse der unteren Platte (3) im Wesentlichen horizontalen und senkrechten Achse mechanisch schwenkbeweglich angebracht ist und sich zwischen einer im Wesentlichen vertikalen Ruheposition und einer auf der unteren Platte (3) aufliegenden ausgefahrenen Position verschwenken kann, wobei die Klappe (5) eine Verbindung zwischen der unteren Platte (3) und der oberen Platte (4) bildet, wobei die Klappe (5) zumindest über einen Teil ihres Schwenkverlaufs mittels der Seitenränder (41) verschwenkt wird, und
- ein mechanisches Teil (71; 72) zur Verriegelung der Klappe (5) in der Ruheposition, das mittels der Seitenränder (41) gelagert und in Bezug auf die Seitenränder (41) passiv ist, und das die Klappe (5) in der Ruheposition der unteren Platte (3) verriegelt und die Klappe (5) freigibt, wenn die untere Platte (3) ihre Ruheposition verlässt.

2. Vorrichtung nach Anspruch 1, wobei die untere Platte (3) mit einem Motor (32) verbunden ist, der ein Ritzel (33) antreibt, das mit einer am Gestell (2) befestigten Zahnstange (22) in Eingriff steht.

3. Vorrichtung nach Anspruch 1 oder 2, einen Querträger (6) aufweisend, der mittels Gleitführungen (31) auf Schienen (14, 15) des Gestells (2) aufliegt, wobei der Träger (6) mittels Kugelgelenken (44) mit der unteren Platte (3) verbunden ist, wobei der Träger (6) einen Motor (32) lagert, der die untere Platte (3) verschieben kann.

4. Vorrichtung nach einem der vorhergehenden Ansprüche, wobei ein Teil des Körpers (40) und jeder Seitenrand (41) der unteren Platte (3) aus einem Stück Falzblech sind, und die untere Platte (3) mindestens ein Eckblech (45) aufweist, das an einer Unterseite (40b) des Körpers (40) befestigt ist.

5. Vorrichtung nach einem der vorhergehenden Ansprüche, wobei der Körper (40) der unteren Platte (3) zwei im Wesentlichen gleichwertige Teile aufweist, wovon jedes mit einem Seitenrand (41) verbunden ist, und die zu einem relativen Versatz in der Lage sind.

6. Vorrichtung nach einem der vorhergehenden Ansprüche, wobei die untere Platte (3) eine mit einem Rad (46) ausgestattete Unterseite (40b) aufweist, das dazu vorgesehen ist, sich am Boden (300) im Nahbereich der ausgefahrenen Position abzustützen.

7. Vorrichtung nach einem der vorhergehenden Ansprüche, wobei die Seitenränder (41) bei der Verschiebung der unteren Platte (3) unter die Klappe (5) gleiten, wobei die Klappe (5) eine Unterseite (5b) aufweist, die zum Kontakt mit einem Druckstück (71) der unteren Platte (3) und zum Kontakt mit den Seitenrändern (41) in der Lage ist.

8. Vorrichtung nach einem der vorhergehenden Ansprüche, wobei die Klappe (5) in der Ruheposition zumindest zum Teil das Gewicht aufnimmt, das von der oberen Platte (4) kommt, und das Gewicht auf das Gestell (2) überträgt.

9. Vorrichtung nach einem der vorhergehenden Ansprüche, wobei die obere Platte (3) zumindest zum Teil mittels mindestens eines Rads oder eines Gleitschuhs in Kontakt mit der Oberfläche (41a) eines Seitenrands (41) auf den Seitenrändern (41) gelagert ist.

10. Vorrichtung nach Anspruch 9, wobei die Oberfläche (41a) des Seitenrands (41) im Wesentlichen querverlaufend eben ist, und wobei das Rad bzw. der Gleitschuh mit einer ebenen Rollfläche bzw. einer ebenen Gleitfläche ausgestattet ist.

11. Vorrichtung nach einem der vorhergehenden Ansprüche, wobei die obere Platte (4) mit einer Schwenkachse ausgestattet ist, die im Wesentlichen horizontal und auf der entgegengesetzten Seite der Klappe (5) angeordnet ist.

12. Vorrichtung nach einem der vorhergehenden Ansprüche, wobei die Höhenposition der oberen Platte (4) mittels zweier Schrauben (55) einstellbar ist.

13. Vorrichtung nach einem der vorhergehenden Ansprüche, darüber hinaus mindestens einen Nocken (74) aufweisend, der mittels der Seitenränder (41) gelagert und in Bezug auf die Seitenränder (41) passiv ist, und der die Klappe (5) führt, wenn die untere Platte (3) ihre Ruheposition verlässt oder ihre Ruheposition wieder einnimmt, wobei das mechanische Teil (72) zur Verriegelung der Klappe (5) und der Nocken (74) jeweils eine Schraube aufweisen, deren Köpfe einander berühren.

## Claims

1. An assistance device (1) for people with reduced mobility, notably for allowing a wheeled vehicle to pass over an obstacle (200), comprising:
- a stationary frame (2),
- a vertically movable upper plate (4),
- a lower plate (3) that is mounted for translational movement along an inclined axis with respect to the horizontal between a rest position under the upper plate (4) and a deployed position, the lower plate (3) comprising a body (40) and two raised lateral edges (41) that are disposed along planes parallel to said axis, each raised lateral edge (41) comprising an upper surface (41a), the upper plate (4) being supported at least in part on said raised lateral edges (41), the deployed position of the lower plate (3) mechanically determining the vertical position of the upper plate (4), said raised lateral edges (41) also forming a guide for moving the vehicle onto and aligning it on the lower plate (3),
- a flap (5) that is mounted so as to pivot mechanically on the upper plate (4) about a substantially horizontal axis perpendicular to the axis of translational movement of the lower plate (3), said flap (5) being able to pivot between a substantially vertical rest position and a deployed position resting on the lower plate (3), said flap (5) forming a junction between the lower plate (3) and the upper plate (4), said flap (5) being pivoted by said raised lateral edges (41) at least over a part of its pivoting travel, and
- a mechanical member (71; 72) for locking the flap (5) in the rest position, said mechanical locking member (71; 72) being supported on said raised lateral edges (41) and being passive with respect to said raised lateral edges (41), locking said flap (5) in the rest position of the lower plate (3) and releasing said flap (5) when said lower plate (3) leaves its rest position.

2. The device as claimed in claim 1, wherein the lower plate (3) is connected to a motor (32) that drives a pinion (33) engaged with a rack (22) fastened to the frame (2).

3. The device as claimed in claim 1 or 2, which comprises a crosspiece (6) that rests on rails (14,15) of the frame (2) by way of sliding guides (31), said crosspiece (6) being connected to the lower plate (3) by ball joints (44), said crosspiece (6) bearing a motor (32) that is able to move the lower plate (3).

4. The device as claimed in one of the preceding claims, wherein a part of the body (40) and each raised lateral edge (41) of the lower plate (3) are made of a single piece of folded sheet metal and the lower plate (3) comprises at least one gusset plate (45) fastened to a lower face (40b) of the body (40).

5. The device as claimed in one of the preceding claims, wherein the body (40) of the lower plate (3) comprises two substantially equivalent parts, each being connected to a raised lateral edge (41) and being capable of a relative offset.

6. The device as claimed in one of the preceding claims, wherein the lower plate (3) has a lower face (40b) provided with a wheel (46) that is intended to press against the ground surface (300) in the vicinity of the deployed position.

7. The device as claimed in one of the preceding claims, wherein the raised lateral edges (41) slide under the flap (5) during the translational movement of the lower plate (3), the flap (5) comprising a lower face (5b) that is able to come into contact with a pusher (71) of the lower plate (3) and is able to come into contact with the raised lateral edges (41).

8. The device as claimed in one of the preceding claims, wherein, in the rest position, the flap (5) takes up at least a part of the weight from the upper plate (4) and transmits said weight to the frame (2).

9. The device as claimed in one of the preceding claims, wherein the upper plate (3) is supported at least in part on the raised lateral edges (41) by at least one wheel or runner in contact with the upper surface (41a) of a raised lateral edge (41).

10. The device as claimed in claim 9, wherein the upper surface (41a) of the raised lateral edge (41) is substantially planar transversely, and wherein the wheel, or the runner, is provided with a planar rolling surface, or a planar sliding surface, respectively.

11. The device as claimed in one of the preceding claims, wherein the upper plate (4) is provided with a substantially horizontal pivot pin disposed on the opposite side from the flap (5).

12. The device as claimed in one of the preceding claims, wherein the vertical position of the upper plate (4) is adjustable by two screws (55).

13. The device as claimed in one of the preceding claims, which also comprises a cam (74) that is supported by said raised lateral edges (41) and is passive with respect to said raised lateral edges (41), said cam (74) guiding the flap (5) when the lower plate (3) leaves its rest position or returns to its rest position, the mechanical member (72) for locking the flap (5) and the cam (74) each comprising a screw, the heads of which are tangential to one another.
